# EUROPEAN PATENT APPLICATION

(11) **EP 2 098 938 A1**
(43) Date of publication of application: **09.09.2009**
(21) Application number: 09162854.5
(22) Date of filing: 25.03.2003
(51) Int. Cl.: G06F 1/00

(54) **Obfuscated source program, source program conversion method and apparatus, and source conversion program**

(30) Priority: 25.03.2002 JP 2002082931
(62) Divisional of application: 03006750.8
(71) Applicant: NEC CORPORATION, Minato-ku, Tokyo 108-8001 (JP)
(72) Inventor: Uchida, Kaoru, Tokyo 108-8001 (JP)
(74) Representative: Vossius & Partner

(57) **Abstract**

A source program conversion tool 511 substitutes for an initialization part of constant data to be included in a source code S1 an initialization part of alternative constant data converted to be in a situation in which decryption is difficult by a reversible conversion process, and generates a source code S2 having a source of an inversion process for restoring original constant data from said alternative constant data inserted into a location before said constant data to which a reference is made

## Description

The present invention relates to technology of obfuscation of process contents of a source program, and more particular to technology of obfuscating thereof by means of a software-manner scheme.

In an information processing system in which a process is performed by software, as a rule, a developer generates a program (source code) by use of a programming language, and translates this into an execute form (object) of machine language by a compile process. What is produced via this procedure is called software that a general user uses normally, and this software is preserved in an object storage section (for example, a disk and a PROM) over an information processing unit that the general user uses, is read out at the time of execution, is placed over a main storage (RAM), and is executed by a CPU, thus allowing a desired process to be realized.

Herein, it becomes necessary to realize obfuscate (non-readability) of process program contents in order that its process contents are not analyzed by a user and an attacker harboring malice. One reason for it is that, as a rule, software is an intellectual property including originality/contrivance of the developer and infringement of an intellectual property right occurs in such a manner that, if analyzed, a similar operational function becomes possible to realize easily, and becomes possible to use without paying a justifiable compensation, and so forth. Also, the following is considered as another reason.

It is presumed that, for example, such a service function that only a formal user, who registered itself to pay compensation or agreed to a charge, was allowed to make execution was arranged over a personal computer (PC). On the other hand, if it is presumed that an execute form of a program for performing this formal-user confirmation process was analyzed, and how the process was realized was understood by the other person, by realizing and performing the process for giving a similar formal-user confirmation result, its service function can be unjustly utilized, and a charge can be evaded, thus a user confirmation/charging function results in being meaningless. Accordingly, contents of the program for performing the formal-user confirmation process as mentioned above need to be protected/capsulated.

The conventional method for realizing obfuscation of such program contents was a method for obfuscating the process contents of the object by a hardware-manner scheme and a software-manner scheme.

A method adapted so that the general user is not able to make access to the object by the hardware-manner scheme is, for example, to obscure a storage section and a processing section with a cover, which the general user is not able to remove, so that the object is not able to be read out, and so forth. Furthermore, in some cases a countermeasure for incorporating such a special scheme is taken that, at the moment that such a cover was removed, the object over the storage section is automatically deleted or damaged.

As to technology for obfuscating of contents of the object by means of a software-manner technique, there is the art described in JP-P1998-161864A (document 1). In the art described in this document 1, a part of a byte code obtained by compiling a source code is encrypted to file it in a disk of a user's computer, and a decoding key thereof is managed in a charging center. On the other hand, a decoding section for decoding an encryption part of the byte code by use of the decoding key acquired from the charging center, and an interpreter for interpreting/executing the decoded byte code are mounted on the user's computer. The byte code decoded in the decoding section is delivered to the interpreter directly or via a work region of a main storage, and is interpreted/executed. This allows the chance that decoded byte data exists over the disk to be eliminated, and obfuscation of the program contents to be realized.

As to another document in which technology for making of obfuscated contents of the object by use of a software-manner technique was described, there is JP-P1999-259574A (document 2). In this document 2, as to execute-form software like contents of image files etc. and game software, encryption and decoding are adapted to be carried by means of a program incorporated in an OS (Operation System) function extended area. That is, by means of a software-manner technique, by incorporating a special concealment mechanism into a system management part to be managed so that the general user is not able to make access easily over the OS, and by arranging such a scheme that the object operates only in being solid for this function, analysis by the general user is made difficult.

As mentioned above, the prior art for obfuscating the program contents is an art for taking the object, and obfuscation of the source code that becomes a basis thereof is not much considered. So as to effectively protect software, needless to say, obfuscation at an object level also is also of importance; however, obfuscation to be made at a source level as well allows stronger protection to be realized. The reason is because an attack against the source code from a person harboring malice is also likely to occur.

However, even though obfuscation is made at the source level, if it is presumed that, so as to simultaneously realize obfuscation as well at the object level, any measure has to be taken in generating the object from the source code for which obfuscation was made, it results in incurring a rise in a development cost.

The present invention has been proposed in consideration of such circumstances, and an objective thereof is to realize concealment of the program contents at the source level by means of a software-manner technique.

Another objective of the present invention is to provide the source code capable of generating the object for which obfuscation was made only by compiling without any need for taking a special measure.

A first obfuscated source program of the present invention has the structure in which: was substituted for an initialization part of constant data an initialization part of alternative constant data converted to be in a situation in which decryption is difficult by a reversible conversion process: and a source of an inversion process for restoring original constant data from said alternative constant data was inserted into a location before a reference to said constant data is made.

A second obfuscated source program of the present invention has the structure in which: was substituted for an initialization part of constant data to be included in a source code of a main program an initialization part of alternative constant data converted to be in a situation in which decryption is difficult by a reversible conversion process; and a first source for performing an initialize process of said alternative constant data, a restoration process of original constant data by performing an inversion process for the alternative constant data for which the above initialize process was performed, and an erase process of said alternative constant data, for which said initialize process was performed, from a main storage was inserted into a location before said constant data to which a reference is made; and a second source for performing an erase process of erasing said restored constant data form the main storage was inserted into a location after said restored constant data to which a reference was made.

In a first source program conversion method of the present invention, an obfuscated source program is generated by: substituting for an initialization part of constant data to be included in a source code of a main program an initialization part of alternative constant data converted to be in a situation in which decryption is difficult by a reversible conversion process; and inserting a source of an inversion process of restoring original constant data from said alternative constant data into a location before said constant data to which a reference is made. In one embodiment, the constant data put between a starting mark and a finishing mark inserted into the source code of the main program by a user is taken as an object of the conversion process, and said source of said inversion process is inserted into a location of an inversion insertion position mark inserted into the source code of the main program by the user.

In a second source program conversion method of the present invention, a obfuscated source program is generated by: substituting for an initialization part of constant data to be included in a source code of a main program an initialization part of alternative constant data converted to be in a situation that decryption is difficult by a reversible conversion process; inserting a first source for performing an initialize process of said alternative constant data, a restoration process of original constant data by performing an inversion process for the alternative constant data for which the above initialize process was performed, and an erase process of said alternative constant data, for which said initialize process was performed, from a main storage into a location before said constant data to which a reference is made; and inserting a second source for performing an erase process of erasing said restored constant data from the main storage into a location after said restored constant data to which a reference was made. In one embodiment, the constant data put between a starting mark and a finishing mark inserted into the source code of the main program by a user is taken as an object of the conversion process, said first source is inserted into a location of an object utilization starting-position mark inserted into the source code of the main program by the user, and said second source is inserted into a location of an object utilization finishing-position mark inserted into the source code of the main program by the user.

A first source program conversion device of the present invention comprises: first means for substituting for an initialization part of constant data to be included in source code of a main program an initialization part of alternative constant data converted to be in a situation in which decryption is difficult by a reversible conversion process; and second means for inserting a source of an inversion process of restoring original constant data from said alternative constant data into a location before said constant data to which a reference is made. In one embodiment, said first means takes the constant data put between a starting mark and a finishing mark inserted into the source code of the main program by a user as an object of the conversion process, and said second means inserts said source of said inversion process into a location of an inversion insertion position mark inserted into the source code of the main program by the user.

A second source program conversion device of the present invention comprises: first means for substituting for an initialization part of constant data to be included in a source code of a main program an initialization part of alternative constant data converted to be in a situation in which decryption is difficult by a reversible conversion process; second means for inserting a first source for performing an initialize process of said alternative constant data, a restoration process of original constant data by performing an inversion process for the alternative constant data for which the above initialize process was performed, and an erase process of said alternative constant data, for which said initialize process was performed, from a main storage into a location before said constant data to which a reference is made; and third means for inserting a second source for performing an erase process of erasing said restored constant data from the main storage into a location after said restored constant data to which a reference was made. In one embodiment, said first means takes the constant data put between a starting mark and a finishing mark inserted into the source code of the main program by a user as an object of the conversion process, said second means inserts said first source into a location of an object utilization starting-position mark inserted into the source code of the main program by the user, and said third means inserts said second source into a location of an object utilization finishing-position mark inserted into the source code of the main program by the user.

In the present invention, is substituted for an initialization part of constant data an initialization part of alternative constant data converted to be in a situation in which decryption is difficult by a reversible conversion process, whereby the source program including the constant data etc. specifying an execute parameter that seems to belongs to know-how can be protected at the source level,

Also, the source of the inversion process for restoring the original constant data from the alternative constant data was inserted into a location before said constant data to which a reference is made, or a first source for performing an initialize process of said alternative constant data and a restoration process of original constant data by performing an inversion process for the alternative constant data for which the above initialize process was performed was inserted into a location before said constant data to which a reference is made, whereby, only by compiling without taking any special measure, the object for which obfuscation was made, which performs the process to be specified by the main source code as planned originally, can be generated.

Furthermore, by adding to the first source the erase process of the alternating constant data, for which the initialize process was made, from the main storage, and yet inserting the second source for performing the erase process of erasing said restored constant data from the main storage into a location after the restored constant data to which a reference was made, protection at the object level can be made stronger.

### BRIEF DESCRIPTION OF THE INVENTION

This and other objects, features, and advantages of the present intention will become more apparent upon a reading of the following detailed description and drawings, in which:
Fig. 1 is a block diagram of the information processing system relating to the first embodiment of the present invention;
Fig. 2 is a view illustrating one example of the source code in the first embodiment of the present invention;
Fig. 3 is a view illustrating one example of the marked source code in the first embodiment of the present invention;
Fig. 4 is a view illustrating one example of the command for starting the source program conversion tool in the first embodiment of the present invention;
Fig. 5 is a view illustrating one example of the source code for which obfuscation was made, which the source program conversion tool outputs, in the first embodiment of the present invention;
Fig. 6 is a flow chart illustrating a flow of the process of the source program conversion tool in the first embodiment of the present invention;
Fig. 7 is a flow chart illustrating a flow of the process on the software utilization side in the first embodiment of the present invention;
Fig. 8 is a block diagram of the information processing system relating to the second embodiment of the present invention;
Fig. 9 is a view illustrating one example of the marked source code in the second embodiment of the present invention;
Fig. 10 is a view illustrating one example of the source code, which the source program conversion tool outputs, in the second embodiment of the present invention;
Fig. 11 is a flow chart illustrating a flow of the process of the source program conversion tool in the second embodiment of the present invention; and
Fig. 12 is a flow chart illustrating a flow of the process on the software utilization side in the second embodiment of the present invention.

### DESCRIPTION OF THE EMBODIMENTS

Hereinafter, embodiments of the present invention will be explained by referring to the accompanied drawings.

### [A FIRST EMBODIMENT]

In the present invention, a code part (a part specifying a process procedure) out of the program that becomes an object of protection is not taken as an object of obfuscation, but the source code data of which a data part (a part specifying a value of a constant data group for use in the process) was principally caused to be in a situation in which decryption is difficult is generated. As a rule, the data group (constant table data etc.) in the source code, for which a developer desires to making capsulation, became a sequence of a plurality of kinds of the constant data, whereby, in the following explanation, the sequence is taken as an object of obfuscation for explanation. Of course, in the present invention, not only the sequence consisting of a plurality of kinds of constant data, but also one kind of the constant data can be taken as an obfuscated object.

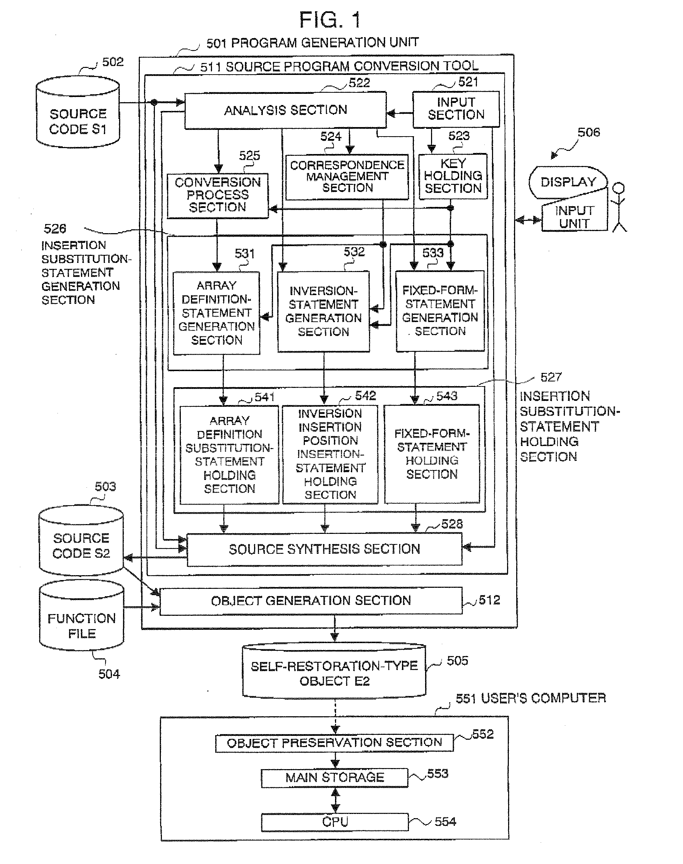

One example of the information processing system for which this embodiment was applied is illustrated in Fig. 1. In Fig. 1, the upper half illustrates a configuration on a software development side, and the lower half illustrates a configuration on a software utilization side.

Referring to Fig. 1, a program generation unit 501, and storage sections 502 to 505 such as a magnetic disk unit and an input/output unit 506 connected hereto are provided on the software development side. The input/output unit 506 includes an input unit such as a keyboard for inputting data and commands into the program generation unit 501 by the developer of software, and a display for outputting data etc. to be output from the program generation unit 501 to the developer. Also, the program generation unit 501 comprises a source program conversion tool 511 and an object generation section 512.

The source program conversion tool 511 is a tool that, from the source program including an array that becomes an object of protection, generates a source program having a source that includes said array in a situation of having been concealed, and yet, at the time of execution in the information processing unit, decodes said array in said situation of having been concealed at least before a reference to said array was made at the first time. This source program conversion tool 511 has an input section 521, an analysis section 522, a key holding section 523, a correspondence management section 524, a conversion processing section 525, an insertion substitution-statement generation section 526, an insertion substitution-statement holding section 527, and a source synthesis section 528. Also, the insertion substitution-statement generation section 526 comprises an array definition-statement generation section 531, an inversion-statement generation section 532, and a fixed-form-statement generation section 533, and the insertion substitution-statement holding section 527 comprises an array definition substitution-statement holding section 541, an inversion insertion position insertion-statement holding section 542, and a fixed-form-statement holding section 543.

The source program conversion tool 511 like this can be realized by means of a computer such as a workstation and a personal computer, and a source conversion program. The source conversion program, which was recorded in a computer-readable record medium such as a magnetic disk and a semiconductor memory that were not shown in the figures, is loaded into the computer at the time of starting the computer and so forth, and, by controlling an operation of its computer, each function section configuring the source program conversion tool 511 is generated over its computer.

On the other hand, an object holding section 552 such as a magnetic disk and a PROM for filing a self-restoration-type program, and a user's computer 551 having a main storage 553 and a CPU 554 are provided on the software user side. The user's computer 551 is a normal personal computer, a portable information terminal etc.

Next, a function and an operation each section of this embodiment will be explained in details. At first, the operation on the software development side will be explained.

The developer develops a source code S of software specifying an originally desired operation by means of a high level programming language. Next, he/she generates the source program having a predetermined object-of-protection instruction mark inserted into a location of a definition part of the sequence in its source code for which capsulation is desired, indicating that the sequence defined by the above location is an object of protection, and, also, a predetermined inversion-function insertion position mark inserted into a location before its sequence to which a reference is made at the first time, indicating that the above location is an insertion position of the inversion function. The number of the sequence for which obfuscation is desired is optional, and in the event of making obfuscation of a plurality of the sequences, the object-of-protection instruction mark, and the inversion function insertion position mark are inserted sequence by sequence. Hereinafter, for convenience of explanation, the number of the sequence for which capsulation is made is taken as one (1) to take its sequence as a sequence A. The marking as mentioned above can be made by use of a normal text editor. The marked source code generated in such a manner is taken as S1. The source code S1 is preserved as an input file into the referable storage section 502 from the source program conversion tool 511.

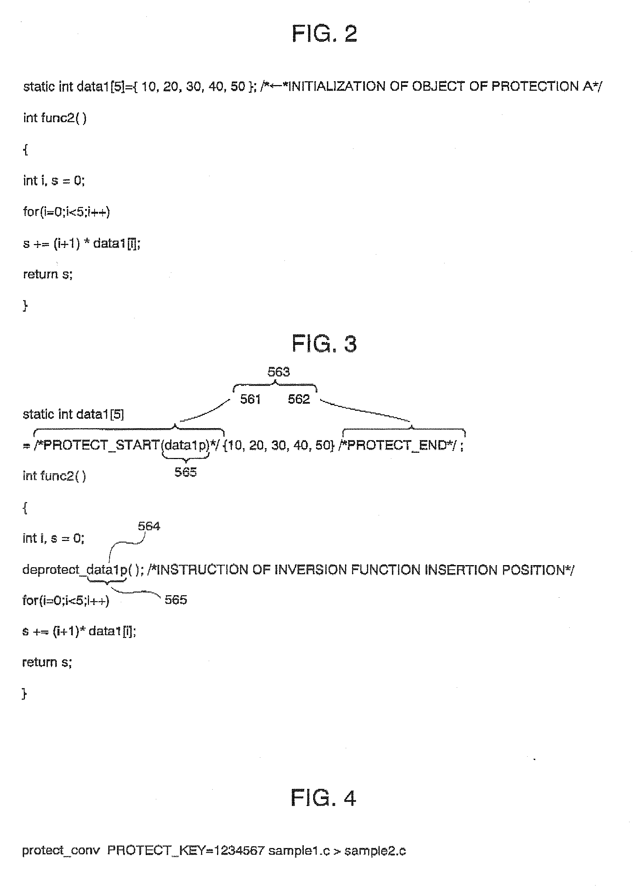

Taking a high level programming language C as an example, one example of the source code S that the developer developed is illustrated in Fig. 2. Also, one example of the source program S1 with which the developer marked this source code S is illustrated in Fig. 3. The definition part that accompanies initialization of an array datal[ ] consisting of five integer elements, and a code part that makes a reference to this array are included in the source code S of Fig. 2, and in the example of Fig. 3, an object-of-protection instruction mark 563 was inserted into the definition part of the array datal[ ], an inversion function insertion position mark 564 was inserted into a location before the array datal[ ] to which a reference was made at the first time. The object-of-protection instruction mark 563 of this example is configured of a starting mark 561 indicating a start of an object of protection, and a finishing mark 562 indicating a finish thereof, and the starting mark 561 includes an encode symbol name 565. Since the encode symbol name 565 is used as an array identifier after conversion, such a name is used that it becomes unique among files (source codes) for performing the conversion process. Also, the same encode symbol name 565 is used for the corresponding inversion function insertion position mark 564 to cause one mark to correspond to the other mark.

By inputting the marked source code S1 as mentioned above into the source program conversion tool 511. the process is automatically performed of: (1) performing a reversible conversion process for an array A of the definition part of data to obtain an resultant array A1 thereof; and (2) inserting a code for executing an inversion operation into a position before the array A to be used, for which insertion of the inversion function was instructed, and the converted source code S2 results in being output.

What is called this reversible conversion process is such f( ) that, as to a sequence A1=f(A) obtained as a result of having performed a conversion process f( ) for a certain array A, such an inversion process g( ) that g(A1)=A is found exists. Herein, as to the conversion process f( ), size of input data and that of output data are identical. Simple ones can be employed such as, for example, calculation by a certain calculation expression on each array element, calculation between neighboring element companions, reversal of an order and a stir of an order of elements within the sequence, taking a calculation result of a secret constant and a first element of the sequence A as a first element of the sequence after conversion A1, further taking a calculation result thereof and a second element of the sequence A as a second element of the sequence after conversion A1, etc. Furthermore, also, now seeing that the purpose of this process is for making the original sequence A difficult to restore/decode, it is more practical to employ a pair of an encryption process and a decoding process of which conversion contents are difficult to infer/analyze due to its complication as a pair of the conversion process and the inversion process. As an example of an encryption algorithm, for example, DES etc. is well-known, by sequentially making calculation by means of a predetermined calculation method employing a certain secret key key, a sequence A1=f(A, key) can be found from the sequence A, and also, by making decoding calculation for the sequence A1 on the basis of the same secret key, A=g(A1, key) can be found. The obtained sequence A1 is a sequence consisting of the same number and the same data type as that of the sequence A.

One example of a command that the developer inputs from the input/output unit 506 in the event of causing the source program conversion tool 511 to perform the marked source code S1 is illustrated in Fig. 4. In Fig. 4, protect_conv is a name of the source program conversion tool 511, sample1.c a name of an input file for filing the source code S1, and sample2.c a name of an output file for outputting the source code S2 that is a conversion result. Also, ┌PROTECT_KEY=1234567┘ indicates that the key of encryption was given from the outside by option.

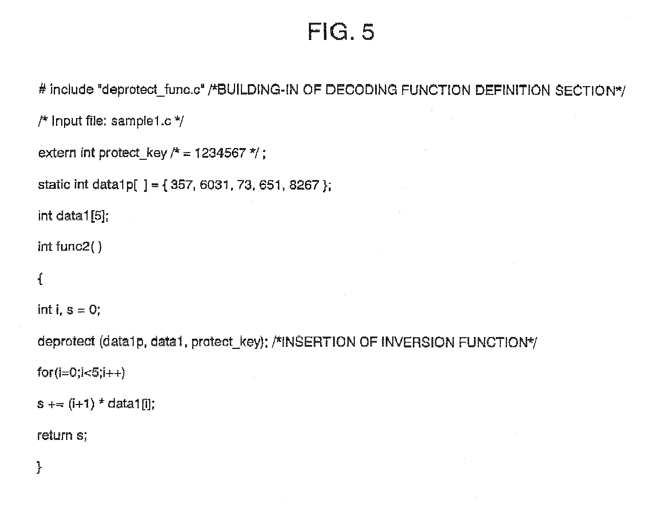

One example of the source code S2 obtained by causing the source program conversion tool 511 to perform the marked source code S1 is illustrated in Fig. 5. In Fig. 5, an array datalp is an array obtained by adding to the original array data1 a reversible conversion f(A, key) together with a secret encryption key protect_key=1234567, and a description in a line of a function deprotect( ) is for instructing an operation g(A1, key) of making inversion by employing the key protect_key=1234567 from the array of data1p to put the result into the array of data1. A code for describing a declaration directive of this inversion function and the process of the main body, which is specified within a pre-arranged source file deprotect_func.c, is loaded with #include"deprotect-func.c".

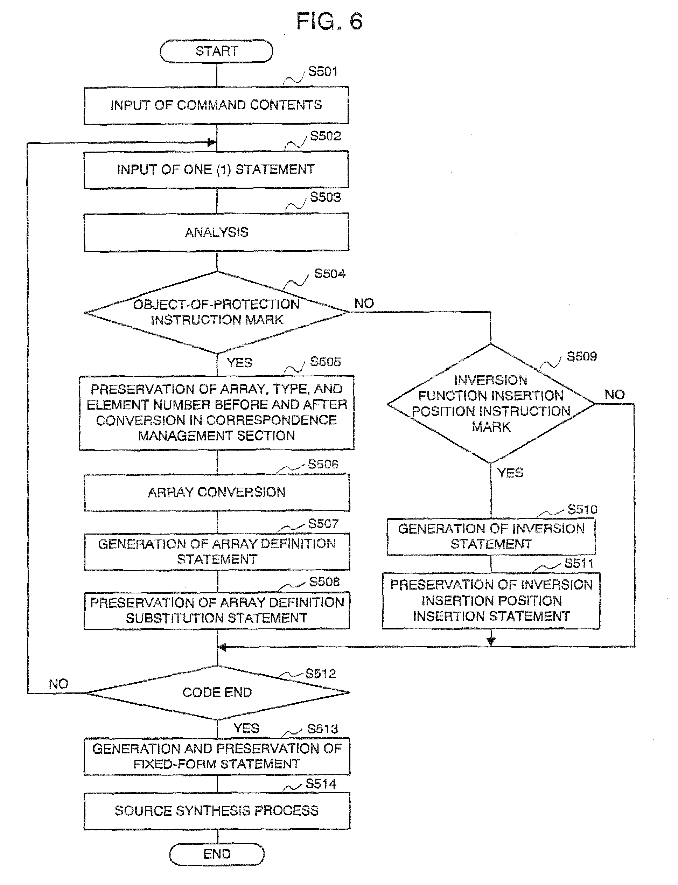

Fig. 6 is a flow chart illustrating a process example of the source program conversion tool 511. Hereinafter, a function and an operation of the source program conversion tool 511 will be explained in details by referring to Fig. 1 and Fig. 3 to Fig. 6.

When the source program conversion tool 511 is started by a command as shown in Fig. 4, the input section 521 incorporates contents of its command (step S501). Out of the incorporated contents of the command, the input file name is transferred to the analysis section 522 and the source synthesis section 528, the output file name to the source synthesis section 528, and the key of encryption to the key holding section 523, and each of them is held respectively.

The analysis section 522 sequentially reads the marked source code S1 as shown in Fig. 3 statement by statement from a file of input file names that exists in the storage section 502 (step S502) to analyze its statement (step S503). As a result of analysis, in the event that the object-of-protection instruction mark 563 existed in its statement (Yes in step S504), a set of an array identifier before conversion ┌data1┘, an array identifier after conversion ┌data1p┘, a type thereof ┌int┘, and an element number ┌5┘ is preserved in the correspondence management section 524 (step S505), and the array identifier ┌data1┘ instructed by the object-of-protection instruction mark 563, the type thereof ┌int┘, and a value of the element ┌10, 20, 30, 40, 50┘ are delivered to the conversion professing section 525. The conversion processing section 525 uses the conversion f( ) by a pre-established encryption technique and the key of encryption preserved in the key holding section 523 to convert and decrypt each element of the sequence, and outputs the sequence after conversion having a value of the element after conversion put side by side together with the array identifier ┌data1┘ to the array definition-statement generation section 531 (step S506). The array definition-statement generation section 531 retrieves the correspondence management section 524 with the array identifier ┌data1┘ delivered from the conversion processing section 525 to acquire the array identifier after conversion ┌data1p┘ and the type ┌int┘, generates two statements of a statement for making definition and initialization of the array after conversion ┌data1p┘ shown in a fourth line of Fig. 5, and a statement for making definition of the array before conversion ┌data1┘ shown in a fifth line of Fig. 5 from these, and the array identifier ┌data1┘ and the value of the element of the array after conversion delivered from the conversion processing section 525 (step S507), and preserves these two statements in the array definition substitution-statement holding section 541 over a memory as an array definition substitution statement (step S508).

In the event that the analyzed statement is a statement including the inversion function insertion position mark 564 (Yes in step S509), the analysis section 522 transfers the array identifier after conversion ┌data1p┘ to be included in its mark to the inversion-statement generation section 532. The inversion-statement generation section 532 retrieves the correspondence management section 524 with its array identifier ┌data1p┘ to acquire the array identifier before conversion ┌data1┘, further acquires the key of encryption from the key holding section 523 to generate an access statement of the inversion function in which the array identifiers before and after conversion and the key are taken as a parameter as shown in a ninth line of Fig. 5 (step S510), and preserves this statement in the inversion insertion position insertion-statement holding section 542 over the memory as a statement to be inserted into an inversion insertion position (step S511).

The analysis section 522 investigates, after the process by the array definition-statement generation section 531 finished in the event that the object-of-protection instruction mark was included in the analyzed statement, after the process by the inversion-statement generation section 532 finished in the event that the inversion function insertion position instruction mark was included in the analyzed statement, or immediately in the event that no mark was included, whether or not the remaining statement exists in the input file (step S512), and if it remains in the input file (No in the step S512), repeats the similar process for the next statement. If execution of the process for all statements including the last one was completed (Yes in the step S512), the fixed-form-statement generation section 533 is started.

The fixed-form-statement generation section 533 generates: a first-line statement of Fig. 5 for incorporating a source file deprotect_func.c specifying a declaration directive of the inversion function, which the inversion-statement generation section 532 generated, and the code of the main body; a third-line statement of Fig. 5 for instructing the key of encryption preserved in the key holding section 523; and in addition hereto, a fixed-form-manner statement such as a comment statement as shown in a second line, and preserves them in the fixed-form-statement holding section 543 (step S513).

When the process by the fixed-form-statement generation section 533 was completed, the analysis section 522 starts the source synthesis section 528. The source synthesis section 528 synthesizes the source code S1 and the source preserved in each of the holding sections 541 to 543 to generate the source code S2 (step S514). Specifically, it outputs the statement held in the fixed-form-statement holding section 543 to the output file in the storage section 503 having an output file name notified from the input section 521, next inputs the marked source code S1 from the input file notified from the input section 521 in an order of beginning with the head statement thereof, and outputs its statement as it stands to the object file if the object-of-protection instruction mark and the inversion function insertion position instruction mark are not included in its statement, the statement held in the array definition substitution-statement holding section 541 instead of its statement if the object-of-protection instruction mark is included in its statement, and the statement held in the inversion insertion position insertion-statement holding section 542 instead of its statement if the inversion function insertion position instruction mark is included in its statement. Thereby, the source code S2 shown in Fig. 5 is generated over the output file.

As apparent from seeing the source code S2 of Fig. 5, another constant data {357, 6031, 73, 651, 8267} was substituted for constant data {10, 20, 30, 40, 50} in the original source code S1 shown in Fig. 2, and it is impossible to know the original constant data {10, 20, 30, 40, 50} , for which protection is desired, without analyzing the calculation method of the inversion function and acquiring the secret key protect_key for use in decoding. Thereby, it becomes possible to protect the constant data in the program at the source level.

Next, the process of the case that the object is generated from the source code S2 generated as mentioned above to utilize it in a user's computer will be explained.

In the event of generating the object from the source code S2, the developer starts the object generation section 512. The object generation section 512 generates an object (execute form) E2 from the source code S2 filed in the storage section 503, and the source file deprotect_func.c over the storage section 504 instructed by a #include statement of this source code S2 by means of a compile operation using a compiler. The object E2 generated in such a manner has a function of restoring a conversion location within its own object to the original contents by the inversion process, which its own object itself possesses, at the time of execution thereof, whereby it is called a self-restoration-type object in this specification.

It is only the data array, which corresponds to the above-mentioned data1p[]= {357, 6031, 73, 651, 6267} , that is placed in a data section for holding the constant data within this object E2, and it is impossible to know the original data array data1 [5]= {10, 20, 30, 40, 50} , for which protection is desired, without analyzing the calculation method of the inversion function and acquiring the secret key protect_key for use in decoding. Thereby, protection of the data array data1 in the program is realized at the object level as well.

The self-restoration-type object E2 developed in such a manner is delivered to the user side, and held in an object preservation section 552 of the user's computer 551. However, how to deliver and file it does not need to be limited to a form of directly filing it in the object preservation section 552, and a form also exists of filing it in a CD-ROM and a flexible disk for distribution to the user, or of distributing it to the user by a method such as a file transfer via a network, which the user then files in the object preservation section 552 such as a hard disk.

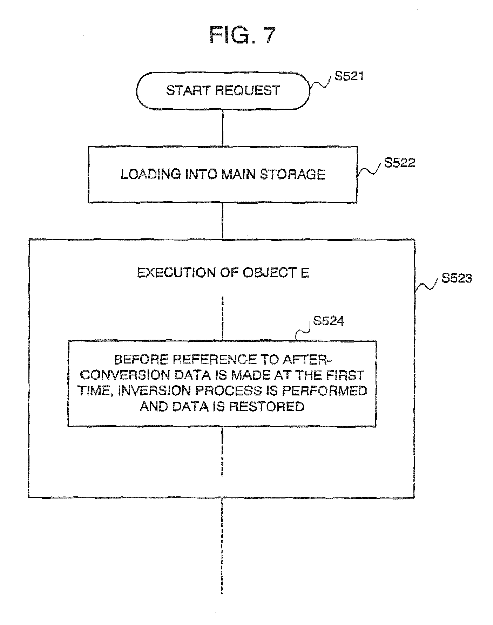

Next, an operation at the moment that the self-restoration-type object E2 filed in the object preservation section 552 of the user's computer 551 is executed will be explained by referring to Fig. 1 and Fig. 7 illustrating a flow of the process on the computer utilization side.

When a start request for the self-restoration-type object E2 occurs in the user's computer 551 (step S521), the self-restoration-type object E2 is loaded from the object preservation section 552 to a main storage 553 by the OS of the above user's computer in similar manner to a general application program (step S522), and a control is shifted to an execute starting point thereof. Thereby, the self-restoration-type object E2 is executed (step S523). And, during this execution, before a reference is made at the first time to the sequence A1 for which the data conversion was made for the sake of obfuscation, the inversion process g(A1, key) is executed for its sequence Al, which is restored to the original sequence A (step S524). Thereby, as planed originally, the process to be specified by the source code S results in being performed. The process as mentioned above is within the range of a normal operation of data within the user program, and the part, which depends on the OS, hardly exists. Accordingly, protection of the object in a non-dependent platform form becomes possible.

In accordance with this embodiment like this, the data part in the source program for which protection is desired specially, can be concealed by means of a software-manner technique. Also, only by compiling the generated software program, the object for which obfuscation was made can be generated, and protection of the object in a non-dependent platform form is also possible.

Additionally, the key Protect_key for use in the encryption process also can be described in the program; however, as another method, by not placing it in the execute form, but giving it from the outside at the time of execution, intensity of protection can be strengthened.

### [A SECOND EMBODIMENT]

This embodiment, which is basically the same as the first embodiment, provides the source code capable of reducing a risk of being analyzed to make protection at the object level more secure by minimizing the time that the array ┌data1┘ that should be protected and its array after conversion ┌data1p┘ exist over the main storage.

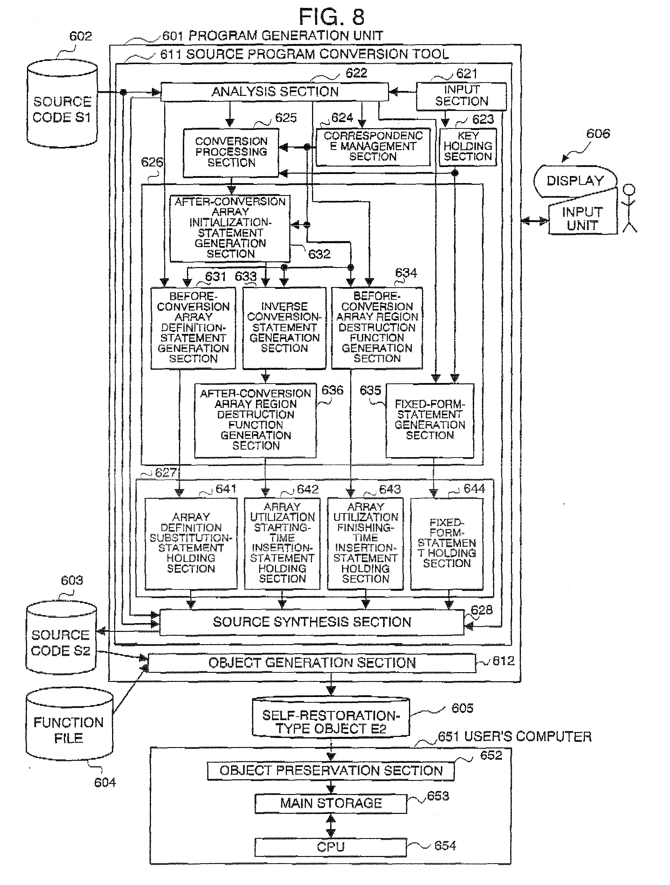

One example of the information processing system for which this embodiment was applied is illustrated in Fig. 8. In Fig. 8, the upper half illustrates a configuration on a software development side, and the lower half illustrates a configuration on a software utilization side.

Referring to Fig. 8, a program generation unit 601, and storage sections 602 to 605 such as a magnetic disk unit and an input/output unit 606 connected hereto are provided on the software development side. The input/output unit 606 includes an input unit such as a keyboard for inputting data and commands into the program generation unit 601 by the developer of software, and a display for outputting data etc. to be output from the program generation, unit 601 to the developer. Also, the program generation unit 601 comprises a source program conversion tool 611 and an object generation section 612.

The source program conversion tool 611 is a tool that, from the source program including an array that becomes an object of protection, generates the source program having a source that: includes said array in a situation of having been concealed, and yet, at the time of execution in the information processing unit, decodes said array in said situation of having been concealed at least before a reference to said array was made; and yet minimizes a lifetime of arrays before and after conversion over the main storage. This source program conversion tool 611 has an input section 621, an analysis section 622, a key holding section 623, a correspondence management section 624, a conversion processing section 625, an insertion substitution-statement generation section 626, an insertion substitution-statement holding section 627, and a source synthesis section 628. Also, the insertion substitution-statement holding section 626 comprises a before-conversion array definition-statement generation section 631, a after-conversion array initialization-statement generation section 632, and an inversion-statement generation section 633, a before-conversion array region destruction function generation section 644, a fixed-form-statement generation section 635, and a after-conversion array region destruction function generation section 636, and the insertion substitution-statement holding section 627 comprises an array definition substitution-statement holding section 641, an array utilization starting-time insertion-statement holding section 642, an array utilization finishing-time insertion-statement holding section 643, and a fixed-form-statement holding section 644.

The source program conversion tool 611 like this can be realized with a computer such as a workstation and a personal computer, and a source conversion program. The source conversion program, which was recorded in a computer-readable record medium such as a magnetic disk and a semiconductor memory that are not shown in the figures, is loaded into the computer at the time of starting the computer and so forth, and by controlling an operation of its computer, each function section configuring the source program conversion tool 611 is generated over its computer.

On the other hand, an object holding section 652 such as a magnetic disk and a PROM for filing a self-restoration-type program, and a user's computer 651 having a main storage 653 and a CPU 654 are provided on the software user side. The user's computer 651 is a normal personal computer, a portable information terminal etc.

Next, a function and an operation of each section of this embodiment will be explained in details. At first, the operation on the software development side will be explained.

The developer develops a source code S of software specifying an originally desired operation by means of a high level programming language. Next, he/she prepares a source code having; a predetermined object-of-protection instruction mark inserted into a location of a definition part of the sequence in its source code S for which capsulation is desired, indicating that the sequence defined by the above location is an object of protection; also, a predetermined object utilization starting-position mark inserted into a location before its sequence to which a reference is made, indicating that the above location is a utilization starting position of its sequence; and a predetermined object utilization finishing-position mark inserted into a location after its sequence to which a reference was made, indicating that the above location is a utilization finishing position of its sequence, respectively. The number of the sequence for which capsulation is desired is optional, and in the event of making obfuscation of a plurality of the sequences, the object-of-protection instruction mark, and the object utilization starting-position mark, and the object utilization finishing-position mark are inserted sequence by sequence. Hereinafter, for convenience of explanation, the number of the sequence for which capsulation is made is taken as one (1) to take its sequence as a sequence A. The marking as mentioned above can be made by use of a normal text editor. The marked source code generated in such a manner is taken as S1. The source code S1 is preserved as an input file into the referable storage section 602 from the source program conversion tool 611.

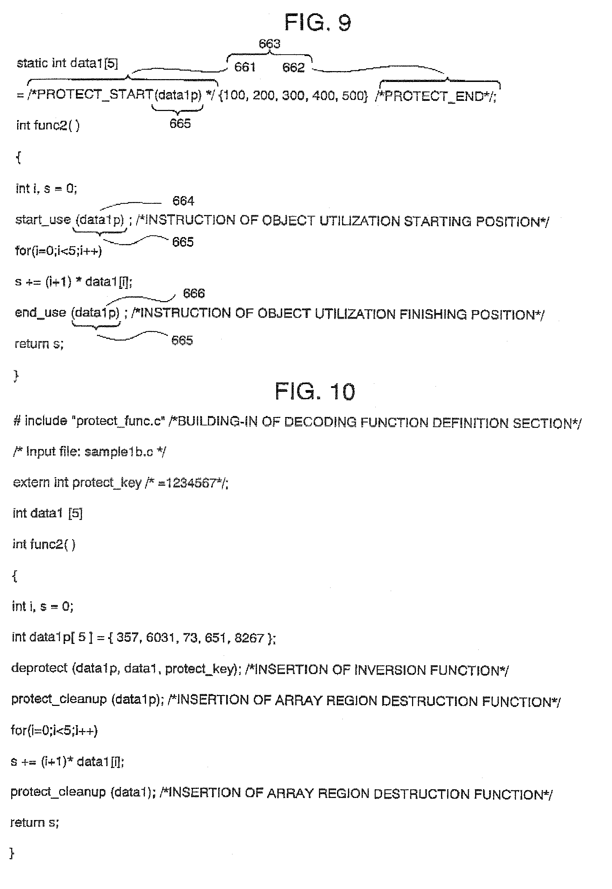

In the event that the source code S1 that the developer developed by use of the high level programming language C was the code shown in Fig. 2 similarly to the first embodiment, one example of the source code S1 with which the developer marked this source code S is illustrated in Fig. 9. In the example of Fig. 9, an object-of-protection instruction mark 663 was inserted into the definition part of the array datai[], an object utilization starting mark 664 into a location before the array datal[] to which a reference was made, and an object utilization finishing mark 666 into a location after the array datal[] to which a reference had been made, respectively. The object-of-protection instruction mark 663 of this example is configured of a starting mark 661 indicating a start of an object of protection, and a finishing mark 662 indicating a finish thereof, and the starting mark 661 includes an encode symbol name 665. Since the encode symbol name 665 is used as an array identifier after conversion, such a name as that it becomes unique among files (source codes) for performing the conversion process is used. Also, the same encode symbol name 665 is used for the corresponding object utilization starting mark 664 and object utilization finishing mark 666 to cause one mark to correspond to the other mark.

By inputting the marked source code S1 as mentioned above into the source program conversion tool 611, the process is automatically executed of: (1) performing the reversible conversion process for the array A of the definition part of data to obtain an resultant array A1 thereof; (2) inserting into a position before the array A to be used a code for executing the inversion operation to restore the array A, and yet destroying (erasing) a region of the array A1 by means of a zero clearance or an overwrite substitution of a random number etc. after the inversion calculation; and (3) inserting into a position after the array A that was used a code for destroying (erasing) a region of the array A by means of a zero clearance or an overwrite substitution of a random number etc., and the converted source code S2 results in being output. This reversible conversion process is the same as that of the first embodiment.

In the event of causing the source program conversion tool 611 to perform the marked source code S1, the developer inputs a command as shown in Fig. 4 from the output/output unit 506 similarly to the first embodiment. One example of the source code S2 obtained by causing the source program conversion tool 611 to perform the marked source code S1 by such a command is illustrated in Fig. 10. In Fig. 10, an array data1p is an array obtained by adding to the original array data1 a reversible conversion f(A, key) together with a secret encryption key protect_key=1234567, and description in a line of a function deprotect( ) is for instructing an operation g(A1, key) of making inversion by employing the key protect_key=1234567 from the array of data1p to put the result into the array of data1. A code for describing a declaration directive of this inversion function and the process of the main body is specified within a pre-arranged source file deprotect_func.c and is loaded with #include"deprotect_func.c". Until this step, the second embodiment is the same as the first one. Next, int data1p[5]= {357, 6031, 73, 651, 8267} is a statement in which data1p was described by an initialization initiator of an automatic array that was mentioned in a C programming language. Also, a description in a line of the function protect_cleanup (data1p) is for instructing the operation of destroying the array of data1p by means of a zero clearance or an overwrite substitution of a random number etc. after the inversion calculation from the array of the datalp, similarly a description in a line of the function protect_cleanup (data1) is for instructing the operation of destroying the array of data1 by means of a zero clearance or an overwrite substitution of a random number etc. after the last utilization of the array of data1. This code for describing the declaration directive of the destruction function and the process of the main body is specified within a pre-arranged source file deprotect_func.c, and is loaded with #include"deprotect_func.c".

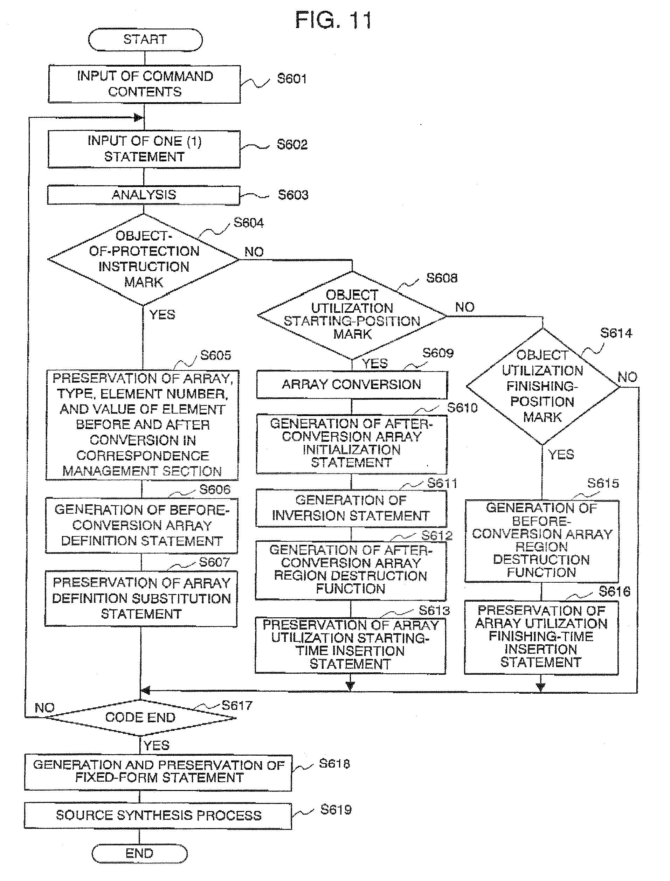

Fig. 11 is a flow chart illustrating a process example of the source program conversion tool 611. Hereinafter, a function and an operation of the source program conversion tool 611 will be explained in details by referring to Fig. 4 and Fig. 8 to Fig. 11.

When the source program conversion tool 611 is started by a command as shown in Fig. 4, the input section 621 incorporates contents of its command (step S601). Out of the incorporated contents of the command, the input file name is transferred to the analysis section 622 and the source synthesis section 628, the output file name to the source synthesis section 628, the key of encryption to the key holding section 623, and each of them is held respectively.

The analysis section 622 sequentially reads the marked source code S1 as shown in Fig. 9 statement by statement from a file of input file names that exists in the storage section 602 (step S602) to analyze its statements (step S603). As a result of analysis, in the event that the objeot-of-protection instruction mark 663 existed in its statement (Yes in step S604), a set of an array identifier before conversion ┌data1┘, an array identifier after conversion ┌data1p┘, a type thereof ┌int┘, an element number ┌5┘, and a column of a value of the element { 10, 20, 30, 40, 50 } is preserved in the correspondence management section 624 (step S605), and the array identifier ┌data1┘ instructed by the object-of-protection instruction mark 663 is delivered to the before-conversion array definition-statement generation section 631, The before-conversion array definition-statement generation section 631 retrieves the correspondence management section 624 with the delivered array identifier ┌data1┘ to acquire information of the type and the element number or its array, generates a definition statement of the array before conversion ┌data1┘ shown in a fourth line of Fig. 10 (step S606), and preserves this in the array definition substitution-statement holding section 641 over a memory as an array definition substitution statement (step S607).

In the event that the analyzed statement is a statement including the object utilization starting-position mark 664 (Yes in step S608), the analysis section 622 delivers the after-conversion array identifier ┌data1p┘ instructed by its mark to the conversion processing section 625. The conversion processing section 625 retrieves the correspondence management section 624 with the after-conversion array identifier ┌data1p┘ to acquire the type of its array ┌int┘, the element number ┌5┘, and a value of the element ┌10, 20, 30, 40, 50┘, uses a conversion f( ) by a pre-established encryption technique and the key of encryption preserved in the key holding section 623 to convert and encrypt each element of the sequence, and delivers the sequence after conversion obtained by putting the value of the element after conversion ┌357, 6031, 73, 651, 8267┘ side by side together with the array identifier ┌data1p┘ to the after-conversion array initialization-statement generation section 632 (step S609). The after-conversion array initialization-statement generation section 632 retrieves the correspondence management section 624 with the array identifier ┌data1p┘ delivered from the conversion processing section 625 to acquire the type of its array ┌int┘, and the element number ┌5┘, and generates a statement for making definition and initialization of the array after conversion ┌data1p┘ shown in an eighth line of Fig. 10 from these, and the array identifier ┌data1p┘ and the value of the element of the array after conversion ┌357, 6031, 73, 651, 8267┘ delivered from the conversion processing section 625 to deliver it to the inversion-statement generation section 633 (step S610). The inversion-statement generation section 633 retrieves the correspondence management section 624 with the array identifier ┌data1p┘ in the delivered statement to acquire the array identifier before conversion ┌data1┘, further acquires the key of encryption from the key holding section 623, generates an access statement of the inversion function in which the array identifiers before and after conversion and the key are taken as a parameter as shown in a ninth line of Fig. 10, and delivers it together with the after-conversion array initialization statement to the after-conversion array region destruction function generation section 636 (step S611). The after-conversion array region destruction-function generation section 636 takes the after-conversion array identifier as a parameter as shown in a tenth line of Fig. 10 to generate an access statement of an after-conversion array region destruction function for destroying the region of the after-conversion array data1p (step S612), and preserves this access statement of the function, and the after-conversion array initialization statement and the access statement of the inversion function delivered from the inversion-statement generation section 633 as an array utilization starting-time insertion statement in the array utilization starting-time insertion-statement holding section 642 (step S613).

In the event that the analyzed statement is a statement including the object utilization finishing-position mark 666 (Yes in step S614), the analysis section 622 retrieves the correspondence management section 624 with the after-conversion array identifier ┌data1p┘ instructed by its mark to acquire the before-conversion array identifier ┌data1┘, takes the before-conversion array identifier as a parameter as shown in a thirteenth line of Fig. 10, generates an access statement of the before-conversion array region destruction function for destroying the region of the before-conversion array data1 (step S615), and preserves this access statement of the function in the array utilization finishing-time insertion-statement holding section 643 as an array utilization finishing-time insertion statement (step S616).

The analysis section 622 investigates, after the process by the before-conversion array definition-statement generation section 631 finished in the event that the object-of-protection instruction mark was included in the analyzed statement, after the process by the after-conversion array region destruction function generation section 636 finished in the event that the object utilization starting-position mark was included in the analyzed statement, after the process by the before-conversion array region destruction function generation section 634 finished in the event that the object utilization finishing-position mark was included in the analyzed statement, or immediately in the event that no mark was included, whether or not the remaining statement exists in the input file (step S617), and if its statement remains in the input file (No in the step S617), repeats the similar process for the next statement. If execution of the process for all statements including the last one was completed (Yes in the step S617), the fixed-form-statement generation section 635 is started.

The fixed-form-statement generation section 635 generates a first-line statement of Fig. 10 for incorporating the source file deprotect_func.c specifying a declaration directive and a main body of the inversion function, and a declaration directive and a main body of the destruction function, a third-line statement of Fig. 10 for instructing the key of encryption preserved in the key holding section 623, and in addition hereto a fixed-form-manner statement such as a comment statement as shown in a second line, and preserves them in the fixed-form-statement holding section 644 (step S618).

When the process by the fixed-form-statement generation section 635 was completed, the analysis section 622 starts the source synthesis section 628. The source synthesis section 628 synthesizes the source code S1 and the source preserved in each of the holding sections 641 to 644 to generate a source code S2 (step S619). Specifically, it outputs the statement held in the fixed-form-statement holding section 644 to the output file in the storage section 603 having the output file name notified from the input section 621, next inputs the marked source code S1 from the input file notified from the input section 621 in an order of beginning with the head statement thereof, and outputs its statement to the output file as it stands if the object-of-protection instruction mark, and the marks of the object utilization start and the finish were not included in its statement, the statement held in the array definition substitution-Statement holding section 641 instead of its statement if the object-of-protection instruction mark was included in its statement, the statement held in the array utilization starting-time, insertion-statement holding section 642 instead of its statement if the object utilization starting-position mark was included in its statement, and the statement held in the array utilization finishing-time insertion-statement holding section 643 instead of its statement if the object utilization finishing-position mark was included. Thereby, the source code S2 shown in Fig. 10 is generated over the output file.

As apparent from seeing the source code S2 of Fig. 10, another constant data {357, 6031, 73, 651, 8267} was substituted for the constant data {10, 20, 30, 40, 50} in the original source code 51 shown in Fig. 2, and it is impossible to know the original constant data {10, 20, 30, 40, 50} , for which protection is desired, without analyzing the calculation method of the inversion function and acquiring the secret key protect_key for use in decoding. Thereby, it becomes possible to protect the constant data within the program at the source level.

Next, the process of the case that the object is generated from the source code S2 generated as mentioned above to utilize it by a user's computer will be explained.

In the event of generating the object from the source code S2, the developer starts the object generation section 612. The object generation section 612 generates a self-restoration-type object E2 (execute form) from the source code S2 filed in the storage section 603, and the source file deprotect_func.c over the storage section 604 instructed by a #include statement of this source code S2 by means of a compile operation using a compiler. In the event of this embodiment, the array data1p was described by the initialization initiator of the automatic array that was mentioned in the C programming language, whereby the data array, which corresponds hereto, was not placed in a data section for holding the constant data, and the code for establishing the array initialization was generated. For this reason, the analysis becomes more difficult as compared with the first embodiment. Also, after the array data1p was used for establishing the array data1 by execution of deprotect( ), it is destroyed, and the array data1 is also destroyed in a similar manner after a reference to all of it. This allows the time as well that the data array data1 that should be protected, and the original array data1p that becomes a basis for its calculation exist over the memory to be minimized, a risk of being analyzed to be reduced, and stronger protection in the program to be realized.

The self-restoration-type object E2 developed in such a manner is held in the object preservation section 652 of the user's computer 651 similarly to the first embodiment.

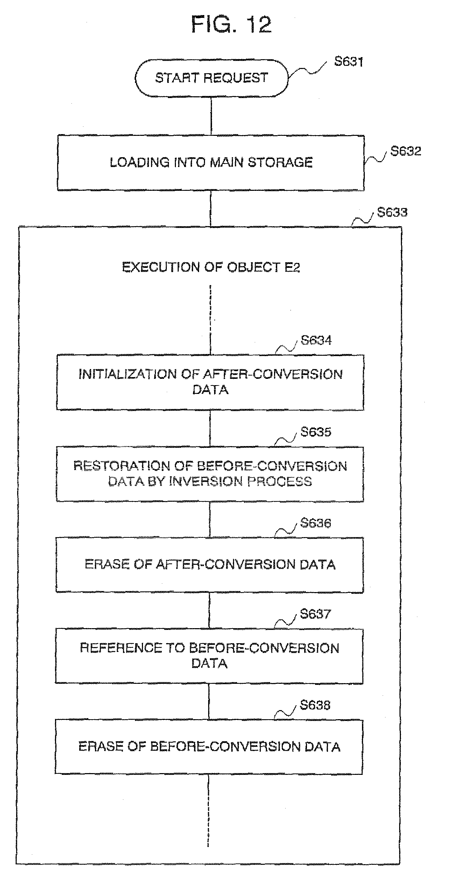

Next, an operation at the moment that the self-restoration-type object E2 filed in the object preservation section 652 of the user's computer 651 is executed will be explained by referring to Fig. 8 and Fig. 12 illustrating a flow of the process on the software user side.

When a start request for the solf-restoration-type object E2 occurs in the user's computer 651 (step S631), the self-restoration-type object E2 is loaded from the object preservation section 652 to the main storage 653 by the OS of the above user's computer 651 similarly to a general application program (step S632), and a control is shifted to an execute starting point thereof. Thereby, the self-restoration-type object E2 is executed (step S633). And, during this execution, the initialization of the sequence Al is made before a reference to the original sequence A is made (step S634), next, the inversion process g(Al, key) is executed for its sequence Al to restore the original sequence A (step S635), thereafter the sequence Al that is a basis for calculation is erased from the main storage 653 by the destruction function (step S636), and after these were all completed, a reference to the restored array A is made (step S637). And, after last utilization of the array A, the array A is erased from the main storage 653 by the destruction function (step S638). Thereby, as planed originally, the process to be specified by the source code S results in being performed. The process as mentioned above is within the range of a normal operation in the user program, and the part, which depends on the OS, hardly exists.

In accordance with this embodiment like this, the data part in the source program for which protection is desired particularly can be concealed by means of a software-manner technique. Also, only by compiling the generated software program, the object for which obfuscation was made can be generated, and execution of the object in a non-dependent platform form is also possible. Furthermore, the time is minimized that the array that should be protected and its array after conversion exist over the main storage, whereby a risk of being analyzed is reduced, and stronger protection becomes possible.

Additionally, the key protect_key for use in the encryption process also can be described in the program; however, as another method, without placing it in the execute form, by giving it from the outside at the time of execution, intensity of protection can be strengthened.

In accordance with the present invention as explained above, the source program including the constant data etc. specifying an execute parameter that seems to belong to know-how can be protected at the source level. The reason is because the initialization part of the alternative constant data converted to be in a situation in which decryption is difficult by the reversible conversion process was substituted for the initialization part of the constant data over the source code.

Also, only by compiling without taking any special measure, the source code capable of generating the object for which obfuscation was made, which performs the process to be specified by the main source code as planned originally can be obtained. The reason is because the source of the inversion process for restoring the original constant data from the alternative constant data was inserted into a location before the constant data to which a reference was made, or a first source for performing the initialize process of said alternative constant data and the restoration process of the original constant data by performing said inversion process for the alternative constant data, for which the above initialize process was performed, was inserted into a location before the constant data to which a reference was made.

Furthermore, the source code capable of making protection at the object level stronger is obtained. The reason is because the source was added for performing the process of, after the alternating constant data for which the initialize process had been made was used for the inversion process, erasing it from the main storage, and after a reference to the restored constant data was made, erasing its restored constant data from the main storage, whereby is shortened at the execution of the object the period that the constant data, which should be protected, and the alternative constant data, which became a basis for its generation, exist in the main storage.

Also, in the present invention, if the developer arranges the source code having the constant data instructed by a predetermined mark, which is taken as an object of protection, the insertion position of the inversion function, and the object utilization starting and finishing positions instructed by predetermined marks, generation of the alternative constant data by the conversion process, insertion thereof into the source, and insertion of the inversion function and the destruction function, etc. are executed, and the obfuscated source code is automatically generated, whereby labor, a labor hour and a burden of expenses of the developer associated with generation, of the obfuscated source code can be alleviated, and the possibility of building bug in can be reduced.

The following items represent further aspects of the present invention.

### Items

**1** An obfuscated source program comprising,
   an initialization part of alternative constant data converted to be in a situation in which decryption is difficult by a reversible conversion process that substitutes for an initialization part of constant data, and
   wherein a source of an inversion process for restoring original constant data from said alternative constant data was inserted into a location before said constant data to which a reference is made.
**2** An obfuscated source program comprising,
   an initialization part of alternative constant data converted to be in a situation in which decryption is difficult by a reversible conversion process that substitutes for an initialization part of constant data to be included in a source code of a main program, and
   wherein a first source for performing an initialize process of said alternative constant data, a restoration process of original constant data by performing an inversion process for the above alternative constant data for which the above initialize process was performed, and an erase process of said alternative constant data, for which said initialize process was performed, from a main storage was inserted into a location before said constant data to which a reference is made, and
   wherein a second source for performing an erase process of erasing said restored constant data form the main storage was inserted into a location after said restored constant data to which a reference was made.
**3** A source program conversion method comprising the steps of:
   substituting an initialization part of alternative constant data converted to be in a situation in which decryption is difficult by a reversible conversion process for an initialization part of constant data to be included in a source code of a main program; and
   inserting a source of an inversion, process of restoring original constant data from said alternative constant data into a location before said constant data to which a reference is made.
**4** The source program conversion method set forth in item 3, further comprising the steps of:
   taking the constant data put between a starting mark and a finishing mark inserted into the source code of the main program by a user as an object of the conversion process; and
   inserting said source of said inversion process into a location of an inversion insertion position mark inserted into the source code of the main program by the user.
**5** A source program conversion method comprising the steps of:
   substituting an initialization part of alternative constant data converted to be in a situation in which decryption is difficult by a reversible conversion process for an initialization part of constant data to be included in a source code of a main program;
   inserting a first source for performing an initialize process of said alternative constant data, a restoration process of original constant data by performing an inversion process for the above alternative constant data for which the above initialize process was performed, and an erase process of said alternative constant data, for which said initialize process was performed, from a main storage into a location before said constant data to which a reference is made; and
   inserting a second source for performing an erase process of erasing said restored constant data form the main storage into a location after said restored constant data to which a reference was made.
**6** The source program conversion method set forth in item 5, further comprising the steps of:
   taking the constant data put between a starting mark and a finishing mark inserted into the source code of the main program by a user as an object of the conversion process;
   inserting said first source into a location of an object utilization starting-position mark inserted into the source code of the main program by the user; and
   inserting said second source into a location of an object utilization finishing-position mark inserted into the source code of the main program by the user.
**7** A source program conversion apparatus comprising:
   first means an initialization part of alternative constant data converted to be in a situation in which decryption is difficult by a reversible conversion process for substituting for an initialization part of constant data to be included in a source code of a main program; and
   second means for inserting a source of an inversion process of restoring original constant data from said alternative constant data into a location before said constant data to which a reference is made.
**8** The source program conversion apparatus set forth in item 7,
   wherein said first means is means that takes the constant data put between a starting mark and a finishing mark inserted into the source code of the main program by a user as an object of the conversion process; and
   wherein said second means is means that inserts said source of said inversion process into a location of an inversion insertion position mark inserted into the source code of the main program by the user.
**9** A source program conversion apparatus comprising:
   first means an initialization part of alternative constant data converted to be in a situation in which decryption is difficult by a reversible conversion process for substituting for an initialization part of constant data to be included in a source code of a main program;
   second means for inserting a first source for performing an initialize process of said alternative constant data, a restoration process of original constant data by performing an inversion process for the above alternative constant data for which the above initialize process was performed, and an erase process of said alternative constant data, for which said initialize process was performed, from a main storage into a location before said constant data to which a reference is made; and
   third means for inserting a second source for performing an erase process of erasing said restored constant data form the main storage into a location after said restored constant data to which a reference was made.
**10** The source program conversion apparatus set forth in item 9,
   wherein said first means is means that takes the constant data put between a starting mark and a finishing mark inserted into the source code of the main program by a user as an object of the conversion process; and
   wherein said second means is means that inserts said first source into a location of an object utilization starting-position mark inserted intro the source code of the main program by the user, and
   wherein said third means is means that inserts said second source into a location of an object utilization finishing-position mark inserted into the source code of the main program by the user.
**11** A source conversion program for causing a computer to function as:
   first means an initialization part of alternative constant data converted to be in a situation in which decryption is difficult by a reversible conversion process for substituting for an initialization part of constant data to be included in source code of a main program; and
   second means for inserting a source of an inversion process of restoring original constant data from said alternative constant data into a location before said constant data to which a reference is made.
**12** The source conversion program set forth in item 11,
   wherein said first means is means that takes the constant data put between a starting mark and a finishing mark inserted into the source code of the main program by a user as an object of the conversion process; and
   wherein said second means is means that inserts said source of said inversion process into a location of an inversion insertion position mark inserted into the source code of the main program by the user.
**13** A source conversion program for causing a computer to function as:
   first means an initialization part of alternative constant data converted to be in a situation in which decryption is difficult by a reversible conversion process for substituting for an initialization part of constant data to be included in a source code of a main program:
      second means for inserting a first source for performing an initialize process of said alternative constant data, a restoration process of original constant data by performing an inversion process for the alternative constant data for which the above initialize process was performed, and an erase process of said alternative constant data, for which said initialize process was performed, from a main storage into a location before said constant data to which a reference is made; and
      third means for inserting a second source for performing an erase process of erasing said restored constant data from the main storage into a location after said restored constant data to which a reference was made.
**14** The source conversion program set forth in item 13,
   wherein said first means is means that takes the constant data put between a starting mark and a finishing mark inserted into the source code of the main program by a user as an object of the conversion process; and
   wherein said second means is means that inserts said first source into a location of an object utilization starting-position mark inserted into the source code of the main program by the user, and
   wherein said third means is means that inserts said second source into a location of an object utilization finishing-position mark inserted into the source code of the main program by the user.
15 A record medium in which a obfuscated source program is stored, said obfuscated source program comprising,
   an initialization part of alternative constant data converted to be in a situation in which decryption is difficult by a reversible conversion process that substitutes for an initialization part of constant data, and
   wherein a source of an inversion process for restoring original constant data from said alternative constant data was inserted into a location before said constant data to which a reference is made.
16 A record medium in which a obfuscated source program is stored, said obfuscated source program comprising,
   an initialization part of alternative constant data converted to be in a situation in which decryption is difficult by a reversible conversion process that substitutes for an initialization part of constant data to be included in a source code of a main program, and
   wherein a first source for performing an initialize process of said alternative constant data, a restoration process of original constant data by performing an inversion process for the above alternative constant data for which the above initialize process was performed, and an erase process of said alternative constant data, for which said initialize process was performed, from a main storage was inserted into a location before said constant data to which a reference is made, and
   wherein a second source for performing an erase process of erasing said restored constant data form the main storage was inserted into a location after said restored constant data to which a reference was made.

## Claims

1. A source code conversion method executed by a computer, the source code conversion method comprising:
substituting an initial value of a variable in a source code marked to be concealed by an alternative
extracting a name of said variable from said source code; and
generating a restoring code including said name at a location of said source code where said restoring code is executed before a value of said variable is referred in run time,
wherein said restoring code is for obtaining said initial value based on said alternative value and setting obtained value to said variable,
the variable in the source code is in the form of a programming language which is translated into an execute form of machine language by a compile process,
the restoring code is in the form of a programming language which is translated into an execute form of machine language by the compile process, and
the initial value is incorporated into the variable and is concealed by the alternative value in the source code.

2. The source code conversion method set forth in claim 1, further comprising:
applying the initial value, put between a starting mark and a finishing mark inserted into the source code by a user, as an object of a conversion process; and
inserting said restoring code for modifying said alternative value into a location of an inversion insertion position mark inserted into the source code by the user.
